Europäisches Patentamt

European Patent Office

Office européen des brevets

(11) Veröffentlichungsnummer: **0 215 141 B1**

(12) **EUROPÄISCHE PATENTSCHRIFT**

(45) Veröffentlichungstag der Patentschrift:
18.04.90

(51) Int. Cl.⁴: **G06K 15/08, B41J 9/26**

(21) Anmeldenummer: **85111565.9**

(22) Anmeldetag: **13.09.85**

(54) Verfahren zur Steuerung von Zeilendruckern mit einem umlaufenden Typenband und einer Druckhammerbank.

(43) Veröffentlichungstag der Anmeldung:
25.03.87 Patentblatt 87/13

(45) Bekanntmachung des Hinweises auf die Patenterteilung:
18.04.90 Patentblatt 90/16

(84) Benannte Vertragsstaaten:
DE FR GB IT

(56) Entgegenhaltungen:
EP-A- 0 071 661
US-A- 4 275 653

(73) Patentinhaber: **IBM DEUTSCHLAND GMBH,
Pascalstrasse 100, D-7000 Stuttgart 80(DE)**

(84) Benannte Vertragsstaaten: **DE**

(73) Patentinhaber: **International Business Machines
Corporation, Old Orchard Road, Armonk, N.Y. 10504(US)**

(84) Benannte Vertragsstaaten: **FR GB IT**

(72) Erfinder: **Bublitz, Hermann Richard, Genkerstrasse 35,
D-7030 Böblingen(DE)**

(74) Vertreter: **Blutke, Klaus, Dipl.-Ing., Schönaicher
Strasse 220, D-7030 Böblingen(DE)**

## Beschreibung

Die Erfindung betrifft ein Verfahren zur Steuerung von Zeilendruckern mit einem umlaufenden Typenträger, der an einer Reihe von den Druckpositionen zugeordneten in einer Bank angeordneten Abdruckelementen vorbeibewegt wird, für die Vorausberechnung der Betätigungszeitpunkte der Abdruckelemente (z.B. der Feuerzeiten von Druckhämmern) zum Abdruck bestimmter Zeichen in bestimmten Druckpositionen eines Aufzeichnungsträgers, wobei der Typenträger äquidistant angeordnete abtastbare Zeitmarken und eine Referenzmarkierung aufweist.

Des weiteren betrifft die Erfindung eine Anordnung zur Durchführung des erfindungsgemäßen Verfahrens.

Die Erfindung und auch der Stand der Technik werden am Beispiel eines Anschlagzeilendruckers mit einem umlaufenden Typenband erklärt. Auf dem Typenband sind die abzudruckenden Zeichen vorgesehen. Der Abdruck der Zeichen in bestimmte Druckpositionen erfolgt durch Druckhämmer, die in einer Druckhammerbank angeordnet sind.

Die Betätigungszeitpunkte der Druckhämmer werden Feuerzeiten genannt.

In der EP-A-071 661 ist eine mikroprozessorgesteuerte Adapterschaltung für Echtzeitsteuerungen, insbesondere für Druckhammersteuerungen beschrieben. Die Adapterschaltung für Druckhammersteuerungen in Zeilendruckern mit umlaufendem Typenträger wird mit 2 "FIFO"-Speichern (first in, first out) asynchron betrieben. Der erste "FIFO"-Speicher enthält Zeitwerte (z.B. Feuerzeitpunkte für die Druckhämmer), der zweite "FIFO"Speicher diesen Zeitwerten zugeordnete Steuerinformation (z.B. Druckhammeradresse, Steuerbefehle für den Druckhammer). Durch eine Anforderungsschaltung (z.B. Zähler) werden nacheinander die Zeitwerte aus dem ersten "FIFO "-Speicher ausgelesen und einer Torschaltung zugeführt zum Durchschalten der diesen Zeitwerten zugeordneten Steuerinformation aus dem zweiten "FIFO"-Speicher zur Steuerung der Ausgangsgrößen.

Ein Verfahren zur Bestimmung der Feuerzeitpunkte der Druckhämmer macht von einer reduzierten Tabelle Gebrauch, in der für jedes Zeichen in jeder Druckposition nur für einige Verschiebewerte des umlaufenden Typenträgers gegenüber dem Druckerrahmen die Positionen (Zeitwerte) gespeichert sind, an denen ein Abdruck des Zeichens erfolgen kann. Für die verbleibenden Verschiebewerte können die Zeitwerte für den Zeichenabdruck durch Division aus den Tabellenangaben ermittelt werden.

Mechanische oder elektrische Toleranzen, die sich auf die Feuerzeitpunkte der Druckhämmer auswirken, werden unter Fortfall einer entsprechenden Justage durch zusätzliche Aufnahme druckhammerspezifischer Korrektur-Verzögerungswerte in die Tabelle ausgeglichen.

Eine Drucksteuerung bei unterschiedlicher Zeichenteilung auf dem Typenband oder bei variabler Druckhammerteilung ist nicht möglich.

In der US-A-4275653 ist ein Typenbanddrucker beschrieben, bei dem die Betätigung selektiv ausgewählter Druckhammerbankabschnitte, der Papiervorschub, die Datenumsetzung und die "Scan"-/"Subscan"-Zeitsteuerung mikroprozessorprogrammgesteuert erfolgt. Die Feuerzeitpunkte für die für den Druckvorgang ausgewählten Druckhammer werden vorausberechnet und während des Papiervorschubs in eine für die Zeitsteuerung erforderliche zeitliche Reihenfolge gebracht, Der Druckvorgang selbst erfolgt unmittelbar im ersten "Scan"-Druckintervall, in welchem ein oder mehrere Zeichen mit den ihnen zugeordneten Druckhämmern ausgerichtet sind. Eine indirekte Adressiermethode vereinfacht die Festlegung der Feuerzeitpunkte für auszuwählende Druckhämmer in der Zeitsteuerungsfolge.

Eine Drucksteuerung bei unterschiedlicher Zeichenteilung auf dem Typenband oder bei variabler Druckhammerteilung ist ebenfalls nicht möglich.

Bisher bekannte Verfahren zur Druckersteuerung lassen sich in zwei Kategorien aufteilen:

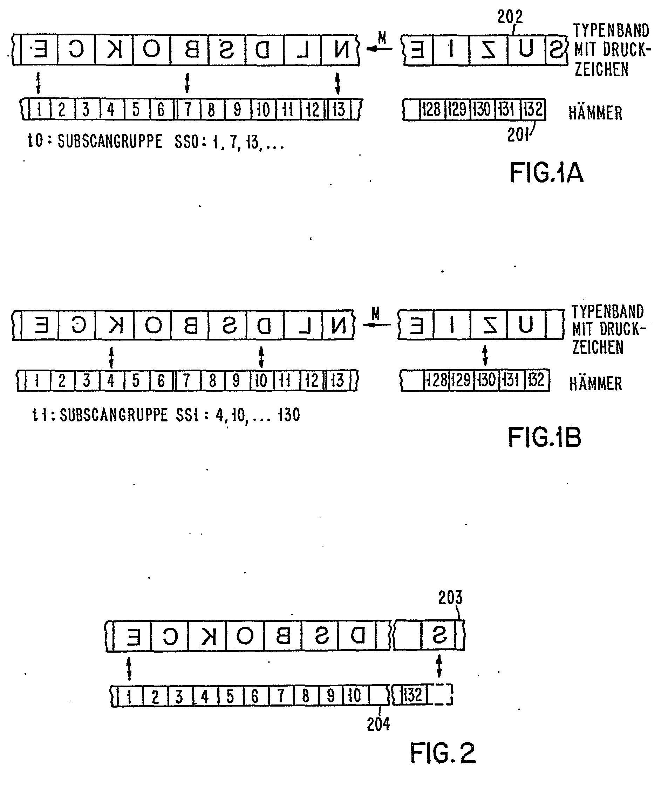

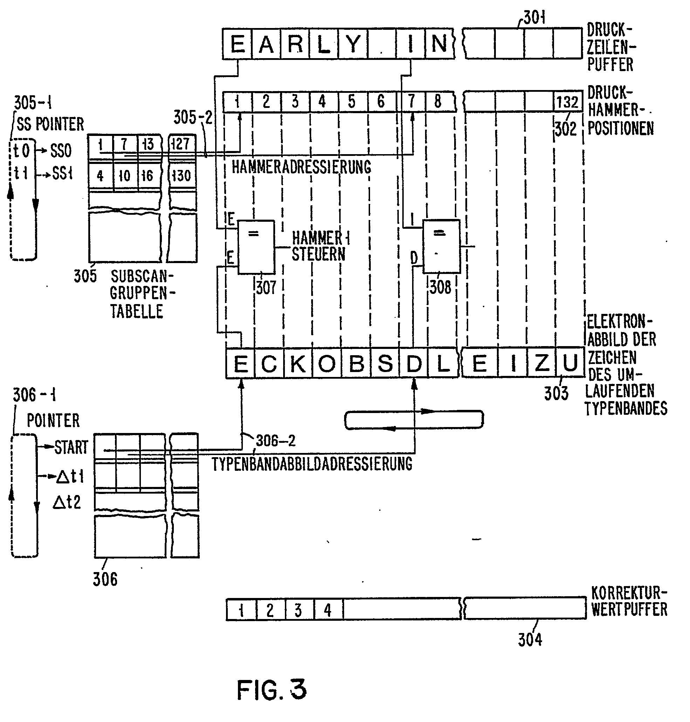

Zum einen gibt es Steuerverfahren (Gang-Firing-Druckersteuerung - wie im Zusammenhang mit Fig. 1 beschrieben und Ripple-Firing-Druckersteuerung - wie im Zusammenhang mit Fig. 3 beschrieben), bei denen während des Umlaufes des Typenbandes unmittelbar vor dem Druck entschieden wird, ob ein Zeichen an einer vorbestimmten Druckposition ausgedruckt werden kann. Diese elektronisch zu treffende Entscheidung erfordert eine bestimmte Zeit. Hohe Druckleistungen verlangen kürzeste Entscheidungszeiten. Wenn sich diese Entscheidungszeit nicht weiter minimieren läßt, ist der Steigerung der Druckleistung eine Grenze gesetzt, so daß für noch leistungsstärkere Schnelldrucker nach anderen Druckersteuerungen gesucht werden muß.

Derartige Druckersteuerungen machen unter Ausnutzung von Mikroprozessoren von der Vorausberechnung (Pre-calculation) der Feuerzeiten der Druckhämmer für den Ausdruck einer Zeile Gebrauch.

Diese Vorausberechnung geschieht im wesentlichen während der Zeit des Zeilenvorschubes. Aber auch bei der Vorausberechnung der Feuerzeiten gibt es eine zeitliche Grenze, die eine weitere Steigerung der Druckleistung nicht zuläßt. Diese zeitliche Grenze ist insbesondere durch einen zeitaufwendigen Sortiervorgang für die errechneten Feuerzeiten bestimmt.

Eine weitere zeitliche Feinrasterung der Feuerzeiten, wie sie z.B. für die Kompensation von Flugzeitschwankungen der Hämmer erforderlich wäre, ist aus diesem Grunde nicht möglich. Da jedoch der Trend in der Druckerentwicklung immer mehr in Richtung höherer Druckleistung geht, bei der sich Flugzeitänderungen der Hämmer ohnehin nachteiliger als bei niederen Druckleistungen auswirken, ist eine Methode aufzuzeigen, wonach die Feuerzeitpunkte doch einem zeitlichen Feinraster zugeordnet werden können. (Nur dann können entsprechende Feinkorrekturen der Feuerzeiten durchgeführt werden.) Dabei müßte natürlich auf zeitintensive Sortiervorgänge verzichtet werden.

Zusätzlich zu dieser vorgenannten Aufgabe der Erfindung soll es das vorzugebende Druckersteuerungsverfahren ermöglichen, bei zeitlicher Feinrasterung der Feuerzeiten eine Links- bzw. Rechtsverschiebung des Zeichenabdrucks zu gestatten. Dadurch ist ebenfalls eine Kompensation bei Flugzeitänderungen möglich und - sofern nur Punktzeichen gedruckt werden - ein nicht oder überlappender Punktrasterdruck, z.B. zur Darstellung von Halbtonbildern.

Im übrigen soll das erfindungsgemäße Verfahren auch einen unterschiedlichen Zeichenabstand auf dem Typenband zulassen. Dadurch wird es möglich, breite, nebeneinanderliegende Zeichen weiter zu beabstanden als es bisher bei der äquidistanten Zeichenteilung auf einem Typenband möglich war. So kann die Anfälligkeit des Bandes gegenüber dem Brechen an Stellen breiter, benachbarter Zeichen vermieden werden.

Alle diese Aufgaben der Erfindung werden in vorteilhafter Weise durch die im kennzeichnenden Teil des Anspruches 1 angegebenen Maßnahmen gelöst. Weitere Ausgestaltungen des erfindungsgemäßen Verfahrens sind den Unteransprüchen zu entnehmen. Eine spezielle Ausgestaltung einer Anordnung zur Durchführung des erfindungsgemäßen Verfahrens für einen lückenlosen Punktrasterdruck ist in den Ansprüchen 6 und 7 gekennzeichnet.

Ein Ausführungsbeispiel der Erfindung ist in den Zeichnungen dargestellt und wird im folgenden näher beschrieben.

Es zeigen:

Fign. 1A und 1B eine schematische Übersicht von Druckhammerpositionen einer Druckhammerbank mit einem sich an ihnen vorbeibewegenden Typenband mit Druckzeichen zu verschiedenen Zeitpunkten zur Verdeutlichung der Begriffe Subscan-Zeit und Subscan-Gruppen für die sogenannte Gang-Firing-Druckersteuerung,

Fig. 2 eine schematische Darstellung von Druckhammerpositionen und einem sich an diesen vorbeibewegenden Typenband mit Druckzeichen zur Verdeutlichung der sogenannten Ripple-Firing-Druckersteuerung,

Fig. 3 eine schematische Darstellung einer Druckersteuerung mit einer tabellengetriebenen Hammeradressierung, einer tabellengetriebenen Typenbandabbildsadressierung und einem Druckzeilenpuffer unter Berücksichtigung von Vergleichsoperationen für das Feuern entsprechender Hämmer,

Fig. 4 eine schematische Darstellung eines Typenbandes mit Zeichen, die unterschiedliche Abstände aufweisen, wobei der Zeichenabstand gleich oder ein Vielfaches eines Grobrasters ist, das aus Unterteilung des Zeitmarkenrasters gewonnen wird,

Fig. 5 eine schematische Darstellung des zeitlichen Abstandes (im Grobraster) der Zeichen auf dem Typenband in Relation zum Home-Puls, der an der Position des ersten Druckhammers auftreten soll,

Fig. 6 eine schematische Darstellung des zeitlichen Abstandes (im Grob- und Feinraster) der Position eines beliebigen Druckhammers in Relation zur Position des ersten Druckhammers unter Berücksichtigung des momentanen zeitlichen Abstandes der Home-Markierung von der ersten Druckhammerposition,

Fig. 7 ein Beispiel für die zeitlichen Abstände von Druckhammerpositionen zu einer Referenzposition,

Fig. 8 eine tabellarische Darstellung für den zeitlichen Abstand der Druckhammerpositionen in Relation zur ersten Druckhammerposition,

Fig. 9 eine tabellarische Darstellung der nach Feinrasterwerten sortierten Druckhammerpositionen,

Fig. 10A und 10B eine schematische ausschnittsweise Darstellung eines Typenbandes mit äquidistanten Zeitmarken und mit einem gedachten Grobraster für unterschiedliche Zeichenabstände,

Fig. 11 eine schematische Darstellung von Tabellen für die Feuerzeiten mit Grob- und Feinrasterangaben,

Fig. 12 eine schematische Darstellung zur Ausgabe der im Druckpuffer stehenden Zeileninformation,

Fig. 13 eine schematische ausschnittsweise Darstellung besonders ausgebildeter Druckhämmer und eines Typenbandes mit zwei Reihen von Punktzeichen,

Fig. 14A und 14B eine schmematische ausschnittsweise Darstellung eines Aufzeichnungsträgers mit einer gemäß der Anordnung nach Fig. 13 ausgedruckten lückenhaften Punktezeile (Fig. 14A) und nach Aufzeichnungsträgervorschub lückenlosen Punktzeile (Fig. 14B).

Bei Schnelldruckern mit umlaufenden Typenträgern – wie Ketten oder Bändern – und den einzelnen Druckpositionen zugeordneten Druckbetätigungsgliedern (Abdruckelemente), im folgenden kurz Druckhammer bzw. Hammer genannt, müssen für eine zeilenweise Informationsausgabe die Druckzeitpunkte der einzelnen in einer Hammerbank angeordneten Druckhämmer festgelegt werden. Diese Festlegung erfolgt in Abhängigkeit von den an den einzelnen Druckpositionen abzudruckenden Zeichen. Derartige Drucksteuerungen gehen zweckmäßigerweise von einer Druckhammerteilung aus, die geringfügig kleiner als die Teilung der Zeichen auf dem umlaufenden Typenträger ist.

Ein Prinzip einer Ablauffolge ist in den Fign. 1A und 1B für die sogenannte "Gang-Firing"-Druckersteuerung wiedergegeben. Die Druckhammerpositionen sind mit 1, 2, 3 bis 132 gekennzeichnet. Das sich an der Druckhammerbank 201 in Pfeilrichtung M vorbeibewegende Typenband 202 mit den Druckzeichen nimmt in Fig. 1A zum Zeitpunkt t0 (Startoder Bezugszeitpunkt) gegenüber der Druckhammerbank 201 eine Position ein, in der die Druckhämmer 1, 7, 13, etc. auf die Zeichen E, B, N ausgerichtet sind (die Ausrichtung ist durch einen Doppelpfeil gekennzeichnet). Der Begriff Startzeitpunkt ist nicht mit dem Beginn der Beschleunigung des umlaufenden Typenbandes bis zum Erreichen der für die Druckvorgänge erforderlichen Umlaufgeschwindigkeit zu verwechseln. Zum Zeitpunkt t0 ist es möglich, die Hämmer 1, 7, 13, etc., die zur sog. Subscan-Gruppe SS0 gehören, zu feuern und die auf sie ausgerichteten Druckzeichen des Typenbandes abzudrucken.

Fig. 1B zeigt die Position des Typenbandes gegenüber der Druckhammerbank 201 zu einem Zeitpunkt t1. Zu diesem Zeitpunkt hat sich das Typenband gegenüber seiner Position gemäß Fig. 1A soweit verschoben, daß nunmehr die Druckhämmer 4, 10, ..., 130 auf die ihnen gegenüberliegenden Druckzeichen K, D, ..., Z ausgerichtet sind. Somit gehören zu der dem Zeitpunkt t1 entsprechenden Subscan-Gruppe SS1 die Hämmer 4, 10, ..., 130. Die Zeitdifferenz t1 - t0 wird als Subscan-Zeit $\Delta$t1 bezeichnet. Diese Zeit vergeht, wenn nach der Ausrichtung eines Hammers auf ein Druckzeichen des Typenbandes nach einer Weiterbewegung desselben ein anderer Druckhammer auf ein anderes Druckzeichen ausgerichtet ist. In der Terminologie der Druckersteuerung werden die Subscan-Zeiten jeweils auf die Startzeit t0 bezogen: $\Delta$t1 = t1 - t0, $\Delta$t2 = t2 - t0, $\Delta$t3 = t3 - t0, etc. Zu den Subscan-Zeiten sind jeweils bestimmte (Subscan)-Gruppen der Hämmer auf ihnen gegenüberliegende Zeichen ausgerichtet, so daß zu diesen Zeitpunkten ein Abdruck erfolgen könnte.

Die in den Fign. 1A und 1B vorgegebene Druckhammerteilung in Relation zu der vorgegebenen Zeichenteilung auf dem Typenband ermöglicht es, daß zu bestimmten Zeitpunkten START, $\Delta$t1, $\Delta$t2 jeweils mehrere Hämmer der Druckhammerbank gefeuert werden können. Dieses Prinzip wird üblicherweise mit Gang-Firing bezeichnet. Dieses Verfahren für eine Druckersteuerung wird z.B. in den Druckern IBM 3262 und IBM 4245 verwendet. Dabei erfolgt eine mikroprogrammierte Berechnung der Feuerzeiten für die Druckhämmer.

Ein anderes Verfahren zur Druckersteuerung wird Ripple-Firing genannt. Kennzeichnend für das Prinzip dieser Druckersteuerung ist, daß zu einem bestimmten Zeitpunkt nur ein einziger Druckhammer der Druckhammerbank gefeuert werden kann. Aus diesem Grunde ist die Zeichenteilung auf dem Typenband 203 gegenüber der Druckhammerteilung in der Druckhammerbank 204 so gewählt, daß zu einem bestimmten Zeitpunkt auf einen Druckhammer nur ein Zeichen des Typenbandes ausgerichtet ist. Die Druckhammerpositionen sind wieder mit 1, 2, 3, ..., 132 gekennzeichnet. Im Falle des in Fig. 2 gezeigten Zeitpunktes ist der Buchstabe E auf den Druckhammer in der Durckhammerposition 1 ausgerichtet. Die Ausrichtung ist wiederum durch einen Doppelpfeil markiert. Beispiele für Drucker, die von dieser Ripple-Firing-Druckersteuerung Gebrauch machen, sind IBM 1403, IBM 3211, IBM 3203. Bei diesen Druckern werden die abzudruckenden Zeichen mit dem in einem RAM (Read Access Memory) gespeicherten elektronischen Abbild der Zeichen des Typenbandes verglichen.

In Fig. 3 ist eine schematische Darstellung einer Gang-Firing-Druckersteuerung gezeigt, bei der eine tabellengetriebene Hammeradressierung, eine tabellengetriebene Typenband-Abbildsadressierung und ein Druckzeilenpuffer benutzt werden unter Berücksichtigung von Vergleichsoperationen für das Feuern entsprechender Druckhämmer. Die Zeichen für eine auszudruckende Druckzeile stehen in einem Druckzeilenpuffer 301. Die Hammerpositionen der Hammerbank 302 sind mit 1 bis 132 gekennzeichnet. Die Hämmer können durch entsprechende Adreßleitungen 305-2 adressiert werden. Ein Umlaufspeicher 303 dient dem elektronischen Abbild der Zeichen des umlaufenden Typenbandes. In einer sogenannten Subscan-Gruppentabelle 305 sind zeilenweise jene Druckhämmer aufgeführt, die zu einer bestimmten Subscan-Zeit gefeuert werden können. Die Adressierung der Zeilen in dieser Tabelle erfolgt umlaufend durch einen sogenannten Subscan-Pointer (SS-Pointer), der von Subscan-Zeit zu Subscan-Zeit in der angegebenen Pfeilrichtung die Tabellenzeilen adressiert. Zum Startzeitpunkt t0 verweist er auf die Subscan-Gruppe SS0, in der die Hämmer 1, 7, 13 und 127 adressiert werden.

In der sogenannten Druckhammer/Druckzeichen-Ausrichtungstabelle 306 werden zu den verschiedenen Subscan-Zeiten jene Felder des Umlaufspeichers 303 über die Adreßleitungen 306-2 adressiert, deren Zeichen zu diesem Zeitpunkt gerade auf bestimmte Druckhämmer (wie durch die Tabelle 305 vorgegeben) für einen möglichen Druck ausgerichtet sind. Die Reihenadressierung in der Tabelle 306 erfolgt durch einen mit PP gekennzeichneten Pointer 306-1, der zu den verschiedenen Zeitpunkten START, $\Delta$t1, $\Delta$t2 in angegebener Pfeilrichtung umläuft. Zum Zeitpunkt t0 sind die Hämmer 1, 7, 13, ..., 127 adressiert (der SS-Pointer 305-1 zeigt auf die SS0-Reihe in Tabelle 305). Zur gleichen Zeit t0 zeigt der PP-Pointer 306-1 auf die erste Reihe der Tabelle 306, durch die die Felder des Umlaufspeichers 303, die zu diesem Zeitpunkt die Zeichen E, D, etc. enthalten, adressiert werden. Durch einen Vergleich (307) der in der ersten Druckposition (durch den Druckhammer 1) in der Druckzeile auszugebenden Buchstaben E (siehe 301) mit dem zu dieser Zeit im Umlaufspeicher 303 auf diese erste Druckhammerposition ausgerichteten Zeichens E wird Zeichengleichheit festgestellt, so daß der Druckhammer für die Druckhammerposition 1 zu feuern ist, damit das Zeichen E in der ersten Druckposition ausgedruckt wird. Entsprechende Vergleiche werden nicht nur für den ersten, sondern auch für den siebenten, dreizehnten, ..., hundertsiebenundzwanzigsten Druckhammer simultan durchgeführt. (Die Vergleicherschaltungen sind mit 307, 308, ... gekennzeichnet.) Zur Zeit t1 zeigt der SS-Pointer 305-1 auf die SS1-Gruppe in der Tabelle 305 und der PP-Pointer 306-1 auf die zweite Reihe der Tabelle 306. Die zuvor beschriebenen Adressierungs- und Vergleichsfunktionen werden zum Zeitpunkt t1 analog zu denen zum Zeitpunkt t0 durchgeführt. Individuelle Flugzeitschwankungen der einzelnen Druckhämmer können dadurch kompensiert werden, daß man ihren Feuerzeitpunkt entsprechend verzögert oder vorverlegt. Die für die Veränderung der einzelnen Feuerzeitpunkte erforderlichen Werte sind in einem Korrekturwertpuffer 304 gespeichert. Für jede in 304 wiederum mit 1, 2, 3, ..., 132 gekennzeichnete Druckhammerposition sind die Korrekturwerte vorgegeben. Ist z.B. für die Druckhammerposition 7 eine Flugzeitkorrektur erforderlich, so wird das Feuern des entsprechenden Druckhammers von dem vorgegebenen Korrekturwert verzögert bzw. vorverlegt.

Im nachfolgend beschriebenen Beispiel zur Verdeutlichung des erfindungsgemäßen Verfahrens zur Steuerung eines Zeilendruckers sind die Abdruckelemente als Druckhämmer ausgeführt. Die Betätigungszeitpunkte der Druckhämmer sind wie allgemein üblich Feuerzeiten genannt. Als umlaufender Typenträger findet ein Typenband Verwendung.

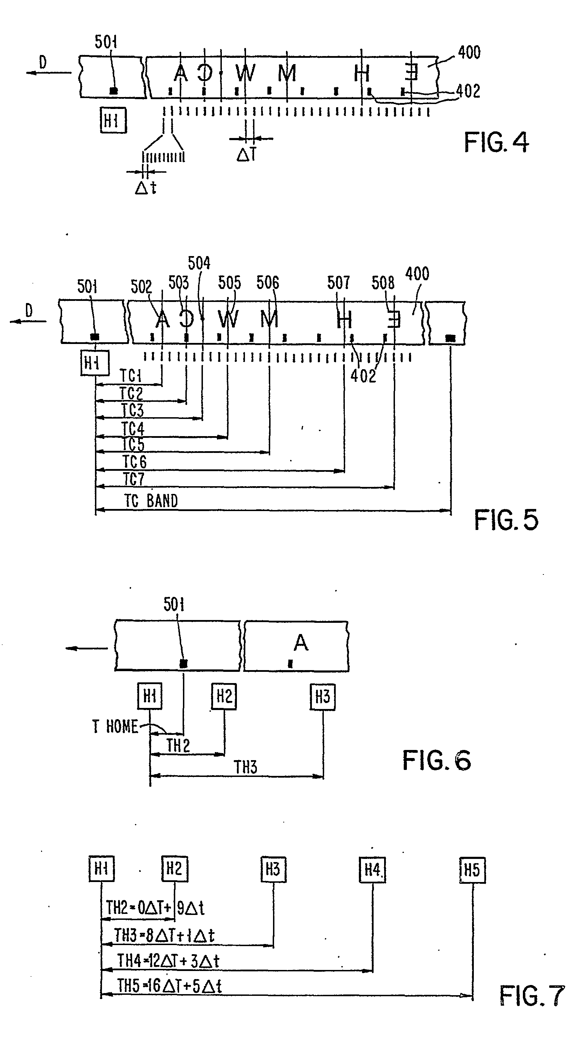

Fig. 4 zeigt in schematischer Darstellung ein Typenband 400 mit äquidistanter Zeitmarken(402)-teilung. Der Abstand benachbarter Zeichen kann unterschiedlich sein. Er entspricht einem Grobraster $\Delta T$ oder einem Vielfachen davon.

Wenn in diesem Zusammenhang von zeitlichen Abständen oder (Zeit)Rastern gesprochen wird, so ist damit folgendes gemeint: Jegliche Abstände und gedachten Rasterstellen auf dem Typenband verstehen sich selbstverständlich als Längen- bzw. Positionsangaben.

Bei gleichbleibender Umlaufgeschwindigkeit des Typenbandes können jedoch diese Angaben auch als Zeitwerte gekennzeichnet werden. So ist z.B. der zeitliche Abstand zwischen der Home-Markierung 501 und dem Zeichen E (Fig. 4, Fig. 5) die Zeit, in der sich das Typenband um die Distanz zwischen 501 und E weiterbewegt.

Das Typenband 400, das in Fig. 4 ausschnittsweise dargestellt ist, soll sich in Richtung D bewegen. Durch das Abtasten der Zeitmarken 402 durch ein Abtastelement an einer ausgewählten Stelle (Abtastpunkt), an dem sich das umlaufende Typenband vorbeibewegt, werden Zeitmarkenpulse gewonnen, die druckerintern elektronisch in ein Grobzeitraster $\Delta T$ und ein Feinzeitraster $\Delta t$ unterteilt werden. Außerdem trägt das Typenband eine sogenannte Home-Markierung 501, von deren Abtastung der Home-Puls abgeleitet wird. Auf diesen Home-Puls werden in der Druckersteuerung die durch das Abtasten der Zeitmarken bedingten Zeitmarkenpulse rückbezogen. Die zeitliche Differenz zwischen Home-Markierung und Zeitmarken bzw. Zeichen unterliegt dem Grobzeitraster.

Es sei in diesem Zusammenhang darauf hingewiesen, daß die Zeitpunkte zur Betätigung der Hämmer einem Feinzeitraster entsprechend gewählt werden.

Fig. 5 zeigt den zeitlichen Abstand der Zeichen auf dem Typenband in Relation zum Home-Puls, der an der Position H1 des ersten Druckhammers auftreten soll. Es wird vorausgesetzt, daß das Druckband 400 in Pfeilrichtung D mit gleichbleibender Geschwindigkeit umlaufen soll. Die Home-Markierung 501, von der sich der Home-Puls ableitet, soll sich an der Position H1 des ersten Druckhammers befinden. Dort befindet sich auch das Abtastelement für die Zeitmarken 402. Vom Auftreten des Home-Pulses bis zum Auftreten des Zeichens A 502 würde die Zeit TC1 (im Grobzeitraster) vergehen; vom Auftreten des Home-Pulses bis zum Auftreten des Zeichens C 503 die Zeit TC2, etc. Die Zeit für den Umlauf des ganzen Typenbandes, gerechnet vom Home-Puls bis zum erneuten Auftreten des Home-Pulses, ist mit TC Band gekennzeichnet. Die Zeitwerte TC1, TC2, TC3, TC4, TC5, etc. werden für jedes Typenband 400 in einer Tabelle Tab T gespeichert. Die Zeitwerte in dieser Tabelle sind gleich oder ganzzahlige Vielfache von $\Delta T$.

Fig. 6 zeigt eine schematische Darstellung des zeitlichen Abstandes der Position eines beliebigen Druckhammers in Relation zur ersten Druckhammerposition unter Berücksichtigung des momentanen zeitlichen Abstandes T Home der Home-Markierung 501 von der ersten Druckhammerposition H1.

Die (Druck-)Positionen des zweiten und dritten Druckhammers sind mit H2 und H3 gekennzeichnet.

Gemäß Fig. 5 könnte das Zeichen A nach Ablauf von TC1 an der ersten Druckhammerposition H1 gedruckt werden. Wollte man jetzt eine Aussage darüber machen, zu welchem Zeitpunkt dieser Buchstabe an der zweiten Druckhammerposition H2 abgedruckt werden kann, so müßte dieser Zeitpunkt um die Zeit TH2 (Fig. 6) vorverlegt werden, da in dieser Zeit das Typenband von der Hammerposition H2 zur Hammerposition H1 bewegt wird. Bei dieser Betrachtung wird allerdings vorausgesetzt, daß sich die Home-Marke bereits an der ersten Druckhammerposition H1 befindet. Nimmt sie zum Betrachtungszeitpunkt noch eine andere, z.B. durch die Zeit T Home (Fig. 6) gekennzeichnete Position ein, so liegt der Druckzeitpunkt für das Zeichen A an der zweiten Druckposition H2 um T Home später. Mit anderen Worten, ist der zeitliche Abstand eines beliebigen Hammers zur Hammerposition H1 bekannt, so kann unter Kenntnis der Werte TC1, TC2, TC3, TC4, ... und des Wertes T Home für jede Hammerposition der Druckzeitpunkt (Feuerzeitpunkt) für ein bestimmtes Zeichen vorgegeben werden. Bei einer Vorausberechnung der Feuerzeitpunkte für alle Hämmer in der Reihenfolge der Hämmer sind jedoch die Druckzeitpunkte nicht nach aufsteigender Reihenfolge - wie es für einen Zeilendruck erforderlich ist - sortiert.

Eine Sortierung der errechneten Werte wäre jedoch für schnelle Drucker aus Zeitgründen nicht durchführbar.

Das erfindungsgemäße Verfahren ermöglicht jedoch eine Berechnung der Feuerzeitpunkte für alle Druckhammerpositionen in nach der Zeit sortierter Reihenfolge.

Die Druckhammerteilung unterliegt einem $\Delta T$ Grobzeitraster und einem $\Delta t$ Feinzeitraster.

In Fig. 7 ist eine schematische Darstellung eines Beispiels für die "zeitlichen Abstände" verschiedener Hammerpositionen in der Druckhammerbank gegeben. (Mit dem zeitlichen Abstand zweier Hammerpositionen ist die Zeit gemeint, die verstreicht, in der sich das Typenband von einer zur einer Referenz-Hammerposition bewegt.) Danach beträgt der zeitliche Abstand TH4 zwischen den Hämmern H4 und H1 acht Grobzeitrasterwerte $8\Delta T$ und drei Feinzeitrasterwerte $3\Delta t$ (zehn Feinzeitrasterwerte sollen im Beispiel einem Grobzeitrasterwert entsprechen).

Die Zeit THn, welche vergeht, wenn sich das Typenband von der n-ten Druckposition Hn bis zur Referenzdruckposition H1 bewegt, ermittelt sich aus Grobzeitraster- und Feinzeitrasterwerten ($\Delta T$ bzw. $\Delta t$).

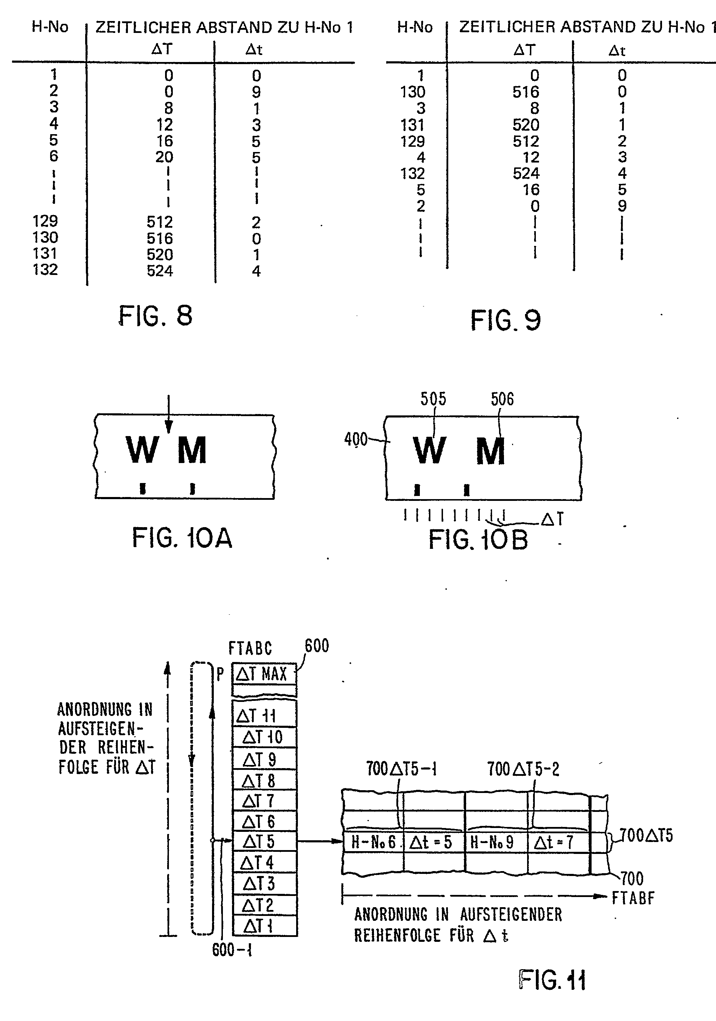

In Fig. 8 ist eine Tabelle für den zeitlichen Abstand der einzelnen Druckhammerpositionen in der Druckhammerbank in Relation zur ersten Druckhammerposition dargestellt. Die Druckhammerpositionen sind durch die Druckhammernummer H.No. in aufsteigender Reihenfolge 1, 2, 3, 4, ... gekennzeichnet. Der zeitliche Abstand der einzelnen Druckhammerpositionen zur Hammerposition H.No. 1 erfolgt durch Angabe eines Grobzeitrasterwertes $\Delta T$ und eines Feinzeitrasterwertes $\Delta t$. Nicht-äquidistante Hammeranordnungen sind möglich.

(Beispiel: Die Hammerposition 3 hat von der Hammerposition 1 einen zeitlichen Abstand von $\Delta T = 8$ und $\Delta t = 1$.)

Diese Tabelle ist ein Charakteristikum der fertig montierten Druckhammerbank. Die zeitlichen Abstände der Druckhammerpositionen lassen sich nach bekannten Verfahren ermitteln.

Diese Tabelle (Fig. 8) bildet die Voraussetzung für das nachfolgend beschriebene erfindungsgemäße Verfahren zur Steuerung von Zeilendruckern.

Basierend auf den Angaben der Tabelle gemäß Fig. 8 wird in einem einmaligen Sortiervorgang eine neue Tabelle erstellt, die in Fig. 9 gezeigt ist. Die Tabelle nach Fig. 9 zeigt die nach den Feinzeitrasterwerten $\Delta t$ sortierten Druckhammerpositionen der Tabelle nach Fig. 8. Die Sortierung erfolgt in aufsteigender Reihenfolge der Feinzeitrasterwerte $\Delta t$. Die Druckhammerpositionen sind wieder mit der Hammernummer H.No gekennzeichnet, und der zeitliche Abstand einer Druckhammerposition zu der ersten Druckhammerposition erfolgt entsprechend Fig. 8 wieder durch Angabe der Grobzeitrasterwerte $\Delta T$ und der Feinzeitrasterwerte $\Delta t$. Ein Blick in die $\Delta t$-Spalte zeigt, daß für sämtlich Hammerpositionen (zumindest soweit sie in der Tabelle gemäß Fig. 8 beispielsweise angegeben wurden) eine aufsteigende Sortierfolge gegeben ist. Für gleiche $\Delta t$-Werte erscheint erst die niedrigere, dann die höhere Hammernummer.

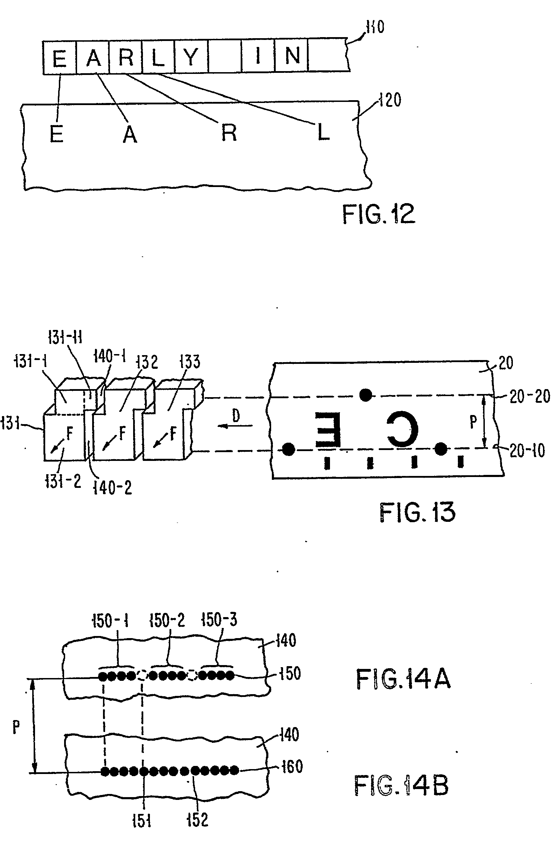

Basierend auf der Tabelle gemäß Fig. 9 ermöglicht das erfindungsgemäße Verfahren zur Druckersteuerung eine Berechnung der Feuerzeiten ohne eine weitere Sortierung aller Feuerzeiten für die Gesamtheit aller Druckpositionen. Zur Vorausberechnung der Feuerzeiten wird gemäß Fig. 11 eine Feuertabelle FTABC 600 für die Grobzeitrasterwerte $\Delta T$ und eine Feuertabelle FTABF 700 für die Feinzeitrasterwerte $\Delta t$ gebildet. Die Werte $\Delta T$ und $\Delta t$ entsprechen denen von Fign. 4, 8 und 9.

Gemäß Fig. 11 wird eine Feuertabelle FTABC 600 für die Grobzeitrasterwerte $\Delta T$ und eine Feuertabelle FTABF 700 für die Feinzeitrasterwerte $\Delta t$ gebildet. Die Werte $\Delta T$ und $\Delta t$ entsprechen denen von Fig. 4. Die Tabelle 600 enthält in aufsteigender Reihenfolge Felder für alle möglichen $\Delta T$-Werte: $\Delta T1$, $\Delta T2$, $\Delta T3$, etc. Diese Tabelle wird von einem Adreßzeiger (Pointer) 600-1 in Pfeilrichtung P im Takte des Grobzeitrasters durchlaufen. Trifft der Pointer (nach Berechnung der Feuerzeiten und deren Eintrag in die Tabellen 600 und 700) auf einen Eintrag in einem Tabellenfeld, d.h. einen Hinweis, daß z.B. während $\Delta T5$ ein oder mehrere Druckhämmer zu feuern sind, so erfolgt über entsprechende Adressierung ein Verweis auf die Tabelle 700, in der zu dem der $\Delta T5$-Zeit zugeordneten Zeilenfeld 700 $\Delta T5$ in Unterfeldern entsprechende Eintragungen bezüglich Hammernummern (H.No) und der Feinzeitrasterwerte $\Delta t$ für den (die) zu feuernden Hämmer vorgegeben sind. Die Eintragungen im Zeilenfeld 700 $\Delta T5$ sind, wie in allen Zeilenfeldern der Tabelle 700, nach $\Delta t$ in aufsteigender Reihenfolge angeordnet. In dem ersten Unterfeld 700 $\Delta T5$-1 des Zeilenfeldes 700 $\Delta T5$ ist als Beispiel für einen zu feuernden Hammer der Hammer Nr. 6 angegeben und der Feinzeitrasterwert $\Delta t = 5$, während in dem darauffolgenden Unterfeld 700 $\Delta T5$-2 der zum Feinzeitrasterwert $\Delta t = 7$ zu feuernde Hammer mit 9 gekennzeichnet ist.

Sind zu einem bestimmten $\Delta t$-Zeitpunkt mehrere Hämmer gleichzeitig zu feuern, so sind für diesen Zeitpunkt in dem entsprechenden Tabellenfeld diese Hämmer angegeben.

Ein anderes Tabellenprinzip als in Fig. 11 angegeben, ist aus der Vorausberechnung der Feuerzeitpunkte für die Gang-Firing-Methode bekannt (IBM Drucker 4245 und 3262). Hierbei wird eine Subscan-Tabelle erstellt, die im Zeittakt der Subscans von einem Pointer durchlaufen wird. Sind in einem Subscan ein bzw. mehrere Hämmer gleichzeitig zu feuern, so verweist ein Pointer aus dieser Subscan-Tabelle auf eine weitere Tabelle mit Eintragungen, welche Hämmer in dieser Subscan-Zeit gleichzeitig zu feuern sind.

Dieses Tabellenprinzip setzt jedoch eine äquidistante Zeichenteilung auf dem Typenband und eine äquidistante Hammerteilung voraus.

Ein großer Nachteil, der aus gleichen Zeichenabständen (von Zeichenmitte zu Zeichenmitte) auf dem Typenband erwächst, liegt darin begründet, daß Typenbänder mit dicht nebeneinanderliegenden breiten Buchstaben, z.B. W und M (siehe Fig. 10A), an der mit dem Pfeil gekennzeichneten Stelle leicht brechen (bei diesen Bändern sind die Zeichen den Zeitmarken zugeordnet). Aus diesem Grunde ist es mitunter wünschenswert, die Zeichenabstände auf dem Typenband zu vergrößern, um einen etwas größeren Zwischenraum zwischen benachbarten breiten Zeichen zu erreichen (Fig. 10B). Dies ist leicht dadurch zu bewirken, indem man den Abstand zweier benachbarter breiter Zeichen erweitert, wobei der Zeichenabstand ein Vielfaches des Grobzeitrasters ($\Delta T$) beträgt.

Die Feuerzeiten werden in der Reihenfolge der in Tabelle 9 aufgeführten Druckhämmer errechnet und entsprechend in die Tabellen 600 und 700 eingetragen.

Die Werte für die Feuerzeiten sind relativ zu dem Zeitpunkt angegeben, zu dem sich die Referenz-Markierung (501) an der Referenzdruckposition H1 befindet.

Bei der Errechnung der Feuerzeit Tf eines Druckhammers) an der n-ten Druckposition Hn (n = 1, 2, 3, 4, ...) zum Abdruck des p-ten Zeichens Cp (p = 1, 2, 3, 4, ...) des Typenbandes (bei fortlaufender Zeichennumerierung bezogen auf die Referenzmarkierung 501) gilt - wie aus den Darstellungen in Fig. 5 und Fig. 6 - ableitbar, die Beziehung

$Tf = TCp - THn$ für einen positiven Differenzwert $TCP - THn$

$Tf = TC\ Band + (TCp - THn)$ für einen negativen Differenzwert $TCp - THn$, welcher von $TC\ Band$ subtrahiert wird.

$TC\ Band$ ist die Zeit für einen Bandumlauf. $TCp$

ist die Zeit, welche vergeht, wenn sich das p-te Zeichen von seiner augenblicklichen Position (für die sich die Home-Markierung an der Stelle der Referenzdruckposition H1 befindet) bis zu der Referenzdruckposition H1 bewegt, wobei THn die Zeit ist, welche vergeht, wenn sich das Typenband von der n-ten Druckposition Hn bis zur Referenzdruckposition H1 bewegt. T Home ist der momentane zeitliche Abstand der Referenzmarkierung (501) von der Referenzdruckposition H1.

Die TCp-Zeiten für die auf dem Typenband befindlichen Zeichen sind im Grobzeitraster festgelegt.

Die Zeitangabe für den Abstand einer beliebigen Druckhammerposition zu einer Referenzhammerposition (im angegebenen Beispiel ist dies die Druckhammerposition H1) schließt sowohl das Grobzeitraster $\Delta T$ als auch das Feinzeitraster $\Delta t$ ein. Basierend auf der einmaligen Vorsortierung der Druckhammerpositionen nach den Feinzeitrasterwerten $\Delta t$ (Fig. 9) erfolgt die Berechnung der Feuerzeitpunkte in der $\Delta t$-Sortierfolge der Hämmer. Für jede Druckhammerposition wird die errechnete Feuerzeit in die dafür vorgesehenen Felder der Tabellen 600 und 700 (Fig. 11) eingetragen. Für einen bestimmten $\Delta T$-Grobzeitrasterwert ist das diesem Wert zugeordnete Feld der Tabelle 600 direkt adressierbar, die Angaben für einen dazugehörigen $\Delta t$-Feinzeitrasterwert werden in das nächste freie Unterfeld des Zeilenfeldes der Tabelle 700 vermerkt, welches dem $\Delta T$-Wert zugeordnet ist. Auf diese Weise ist eine Sortierung der Feuerzeitpunkte nicht mehr erforderlich. Nach Berechnung und Eintrag aller Feuerzeiten sind diese durch die vorgegebene Struktur der Tabellen 600 und 700 (Tabelle 11) bereits aufsteigend geordnet.

Folgend wird an einem Beispiel die Vorausberechnung der Feuerzeiten für die im Druckzeilenpuffer 110 stehende Information beschrieben. Es wird davon ausgegangen, daß gemäß Fig. 12 das Zeichen E in der ersten Druckposition, das Zeichen A in der zweiten Druckposition, das Zeichen R in der dritten Druckposition usw. des Aufzeichnungsträgers 120 ausgegeben werden soll. Die Zeichen im Druckzeilenpuffer folgen konsekutiv aufeinander, ohne Berücksichtigung der Zeichenabstände auf dem Typenband bzw. der möglichen unterschiedlichen Hammerabstände.

Aus der Beziehung

Tf = TCp - THn für einen positiven Differenzwert TCP - THn

Tf = TC Band + (TCp - THn) für einen negativen Differenzwert TCp - THn, welcher von TC Band subtrahiert wird

läßt sich für jedes Zeichen im Druckzeilenpuffer die Feuerzeit vorausberechnen. Bei der Errechnung dieser Feuerzeiten (in der Reihenfolge der Hämmer gemäß Fig. 9) in aufsteigender $\Delta t$-Folge erfolgen die entsprechenden Eintragungen in der Tabelle 600 und in der Tabelle 700.

Sind mehrere gleiche Zeichen auf dem Band vorgesehen, so wird dafür Tf mehrmals errechnet und von allen Werten der gewählt, welcher dem geplanten Startzeitpunkt der Druckoperation am nächsten liegt. Die Auswahl kann durch bekannte Verfahren, die nicht Teil dieser Anmeldung sind, abgekürzt werden.

Das Ausdrucken der im Druckzeilenpuffer stehenden Zeichen erfolgt dann aufgrund der Vorausberechnungen gemäß den in den Tabellen 600 und 700 stehende Werte. Die Tabelle 600 wird im Takte der $\Delta T$-Werte von einem Pointer durchlaufen. Finden sich für einen $\Delta T$-Wert Eintragungen für einen oder mehrere zu feuernde Hämmer, so erfolgt eine Verzweigung von der Tabelle 600 in die Tabelle 700, und die dort aufgeführten Hämmer werden in der Reihenfolge aufsteigender $\Delta t$-Werte bezogen betätigt. ((Vergleichsoperationen 307, 308) wie in der Druckersteuerung gemäß Fig. 3 sind hierbei nicht erforderlich)).

Das erfindungsgemäße Drucksteuerungsverfahren ermöglicht erstmals eine Drucksteuerung bei unterschiedlichem Zeichenabstand auf dem Typenband und bei einer variablen Druckhammerteilung.

Es ermöglicht durch die zeitliche Feinrasterung der TH-Werte eine einfache Kompensation von Flugzeitabweichungen der Hämmer in Synchronisation mit dem zeitlichen Fein- bzw. Grobzeitraster. Die Kompensation erfolgt durch entsprechende Änderung der THn-Werte.

Außerdem ist es möglich, auch die in Fig. 2 aufgezeigte Ripple-Firing-Druckersteuerung einer praktikablen Vorausberechnung der Feuerzeiten zugänglich zu machen, was bisher aus Zeitgründen (Sortiervorgänge) nicht praktikabel war.

Das beschriebene Drucksteuerungsverfahren bietet auch die Möglichkeit, Zeichen unter Änderung der Grobzeitrasterwerte $\Delta T$ in der Tabelle 700 mit einer entsprechenden Links- oder Rechtsverschiebung von ihrer ursprünglichen Druckhammerzentralen auf das Grobraster ausgerichteten Position auszudrucken.

Damit ergibt sich auch die Möglichkeit, bei Verwendung von bestimmten Typenbändern, die neben den üblichen Prägezeichen auch eine Vielzahl von Punkten in zwei Spuren (Fig. 13) enthalten, als Druckausgabe auch einen Rasterpunktdruck vorzusehen, bei dem selbstverständlich auch die Punkte überlappen können. Auf diese Art und Weise ist es möglich, Bilder mit unterschiedlichen Grautönen wiederzugeben. Dabei wird vorausgesetzt, daß der Papiervorschub bei Zeilendruckern ein Höchstmaß an Feinheit in der Vorschubbewegung des Aufzeichnungsträgers garantiert. Derartige feinauflösende Papiervorschubsteuerungen sind jedoch bekannt und gehören zum Stand der Technik.

Somit gestattet das erfindungsgemäße Verfahren, die Vorteile des Prägezeichendrucks (hohe Geschwindigkeit) mit denen des Rasterpunktdruckes (Bilder, Graphik, programmierbare Zeichen) zu vereinen.

Selbstverständlich erlaubt das Verfahren auch einen reinen Rasterpunktdruck, für das die Typenbänder dann nur Punktzeichen aufweisen zu brauchen.

Der Nachteil, der sich beim Ausdrucken z.B. dicht nebeneinanderliegender oder auch überlappender Punkte ergibt, wenn zwischen benachbarten Hämmern ein, wenn auch sehr kleiner Abstand in Kauf genommen werden muß, kann durch eine besondere Ausbildung der Hammeranschlagsflächen und des Typenbandes überwunden werden (Fig. 13, Fign. 14A, 14B).

In Fig. 13 sind drei Druckhämmer 131, 132, 133 einer Druckhammerbank in ausschnittsweiser perspektivischer Darstellung gezeigt. Die Aktionsrichtung der Druckhämmer ist jeweils durch einen Pfeil F gekennzeichnet. Die Anschlagsfläche eines Druckhammers weist eine vom Rechteck abweichende Ausbildung auf. In dem Ausführungsbeispiel nach Fig. 13 kann man sich die Anschlagsfläche eines Druckhammers aus einem Rechteck dadurch entstanden denken, daß ein oberer Teil des Rechteckes 131-1 gegenüber dem unteren Teil 131-2 nach rechts so weit seitenverschoben ist, daß der obere Teil den unteren Teil 140-2 des treppenförmigen Spaltes 140-1/140-2 zwischen den benachbarten Hämmern 131 und 132 überragt. Die anderen Druckhämmer sind in der gleichen Weise wie der Druckhammer 131 ausgebildet. In diesem Zusammenhang sei erwähnt, daß auch andere Ausführungsformen der Druckhammeranschlagsflächen denkbar sind, z.B. können diese Flächen als Parallelogramme ausgeführt sein, wobei sich zwischen benachbarten Druckhämmern ein schräger Abstandsspalt bildet.

Diese besondere Ausbildung der Druckhämmer soll sicherstellen, daß ein lückenloser Punktdruck möglich ist. Zur Ausführung eines solchen lückenlosen Punktdruckes wird ein Typenband 20 verwendet, das eine untere 20-10 und eine obere 20-20 Reihe von Punktzeichen aufweist. Außerdem weist es die üblichen Prägezeichen auf, von denen E und C (spiegelbildlich) dargestellt sind. Es sei angenommen, daß sich das in Fig. 13 mit 20 bezeichnete und ausschnittsweise dargestellte Typenband in Richtung D an den Druckhämmern vorbeibewegt. Durch entsprechende Aktivierung der Druckhämmer 131, 132, 133 ist es möglich, eine Punktreihe 150 (Fig. 14A) auf einem Aufzeichnungsträger 140 auszudrucken. Zum Ausdrucken der Punktreihe 150 wird die untere Reihe der Punktzeichen 20-10 auf dem Typenband benutzt. Die Punkte werden von den unteren Teilen der Druckhämmer, z.B. 131-2, abgedruckt. Es sei angenommen, daß die Punktgruppe 150-1 vom Druckhammer 131, die Punktgruppe 150-2 vom Druckhammer 132 und die Punktgruppe 150-3 vom Druckhammer 133 gedruckt wird. Die zwischen diesen Punktgruppen 150-1 und 150-2 bzw. 150-2 und 150-3 verbleibenden Punktlücken sind durch den Abstand der Druckhämmer 131/132 bzw. 132/133 bedingt. Um diese unerwünschten Punktlücken auch mit Punkten auffüllen zu können, wird der Aufzeichnungsträger 140 nach der Ausgabe der ersten Punktreihe 150 um den Betrag P vorgeschoben. Dadurch gelangt die Punktreihe 150 in eine Position, in der sie mit der oberen Punktzeichenreihe 20-20 des Typenbandes 20 fluchtet. Nunmehr werden in die verbliebenen Punktlücken der Punktzeile 150 Punkte 151, 152 gedruckt, indem Punktzeichen der oberen Punktzeichenreihe des Typenbandes vom oberen Teil der Druckhämmer, z.B. 131-1, zum Abdruck gelangen. Dieser Abdruck wird durch den Bereich 131-11, welcher den unteren Abstandsspalt 140-2 zwischen den benachbarten Druckhämmern 131, 132 überragt, vollzogen. Dieser Bereich 131-11 hat damit die Funktion, einen Punkt abzudrucken, der im ersten Druckzyklus bei der Wiedergabe der Punktreihe 150 wegen des Abstandsspaltes 140-2 zwischen den Druckhämmern 131, 132 nicht gedruckt werden konnte.

Nach Ausdrucken der Punkte 151 und 152 in die Lücken der Druckzeile 150 ist die vollständige Druckzeile 160 gebildet (Fig. 14B).

Es wurde bereits darauf hingewiesen, daß durch entsprechende Links- oder Rechtsverschiebung die Position der auszudruckenden Punkte variiert werden kann und daß es bei entsprechender Steuerung auch möglich ist, Punkte einander zu überlappen (insbesondere zur Erzeugung von Grautonbildern).

**Patentansprüche**

1. Verfahren zur Steuerung von Zeilendruckern mit einem umlaufenden Typenträger, der an einer Reihe von den Druckpositionen zugeordneten in einer Bank angeordneten Abdruckelementen vorbeibewegt wird,

für die Vorausberechnung der Betätigungszeitpunkte Tf der Abdruckelemente zum Abdruck bestimmter Zeichen in bestimmten Druckpositionen eines Aufzeichnungsträgers,

unter Verwendung eines Typenträgers mit äquidistant angeordneten abtastbaren Zeitmarken und mit einer Referenzmarkierung,

dadurch gekennzeichnet,

daß der Abstand der Zeichen auf dem Typenträger (400) bezüglich der Referenzmarkierung (501) einem Grobrasterwert ($\Delta T$) oder ganzzahligen Vielfachen davon entspricht,

daß die Grobrasterteilung aus der Zeitmarkenteilung abgeleitet wird, wobei die Zeitmarken (402) zugleich Grobrasterpositionen einnehmen,

daß die Teilung der Abdruckelemente in der Bank unterschiedlich ist und der Abstand einer Druckposition zu einer Referenzdruckposition (H1) einem Grobrasterwert ($\Delta T$) oder Vielfachen davon und einem zusätzlichen Feinrasterwert ($\Delta T$) oder Vielfachen davon entspricht,

wobei die Grob- und Feinrasterwerte als Grob- und Feinzeitrasterwerte – bezogen auf die Umlaufgeschwindigkeit des Typenträgers (400) – definiert werden,

daß die Abdruckelemente nach den Feinrasterzeitwerten ihres Abstandes von der Referenzdruckposition sortiert (Fig. 9) und

ihre Betätigungszeitpunkte (Tf) in der sich aus dieser Sortierung ergebenden Folge der Abdruckelemente errechnet werden,

und daß der Betätigungszeitpunkt eines Abdruckelementes an der n-ten Druckposition Hn, n = 1, 2, 3, 4, ..., zum Abdruck des p-ten Zeichens Cp, p = 1, 2, 3, 4, ..., auf dem Typenträger bei fortlaufender Zeichennumerierung bezogen auf die Referenzmarkierung (501) und bei fortlaufender Druckpositionsnumerierung bezogen auf die Referenzdruckposition H1,

aus der Beziehung

$Tf = TCp - THn$ für einen positiven Differenzwert $TCP - THn$

Tf = TC Band + (TCp − THn) für einen negativen Differenzwert TCp − THn,

welcher von TC Band subtrahiert wird, errechnet wird,

wobei TC Band die Zeit für einen Bandumlauf ist und TCp die Zeit ist, welche vergeht, wenn sich das p-te Zeichen von seiner augenblicklichen Position bis zu der Referenzdruckposition (H1) bewegt, und wobei THn die Zeit ist, welche vergeht, wenn sich das Typenband von der n-ten Druckposition Hn bis zur Referenzdruckposition (H1) bewegt,

und wobei T Home die Zeit ist, welche vergeht, wenn sich die Referenzmarkierung (501) von ihrer augenblicklichen Position bis zur Referenzdruckposition (H1) bewegt,

und daß eine erste Tabelle FTABC (600) und eine zweite Tabelle FTABF (700) gebildet werden, wobei die erste Tabelle (600) für jeden möglichen Grobrasterzeitwert in aufsteigender Reihenfolge ein Feld aufweist,

und wobei die zweite Tabelle (700) in Zuordnung zu jedem Grobrasterzeitwert der ersten Tabelle (600) ein Zeilen-Feld (700 ΔT5), bestehend aus mehreren Unterfeldern (700 ΔT5-1, 700 ΔT5-2), aufweist,

und daß nach Errechnung des Betätigungszeitpunktes für ein Abdruckelement für den Grobzeitrasterwert des errechneten Betätigungszeitpunktes in dem diesem zugeordneten Feld der Tabelle (600) eine Eintragung für den später zu vollziehenden Druck erfolgt,

und für den Feinzeitrasterwert des errechneten Betätigungszeitpunktes in dem nächsten freien Unterfeld des dem Grobrasterzeitwert zugeordneten Zeilenfeldes eine Eintragung für die Druckpositionsnummer und des Feinzeitrasterwertes für den später zu vollziehenden Druck erfolgt,

und daß zum Abdruck einer Druckzeile die Felder der ersten Tabelle (600) in aufsteigender Reihenfolge der Grobzeitrasterwerte adressiert werden, und daß bei einer Grobzeitraster-Tabellenfeldeintragung für einen zu vollziehenden Druck zu dem diesem Grobzeitrasterwert zugeordneten Zeilen-Feld der zweiten Tabelle (700) verzweigt wird und für die dort angegebenen Druckpositionen in aufsteigender Reihenfolge der Feinzeitrasterwerte der Druck zu einem Zeitpunkt erfolgt, der sich aus der Addition des Grobzeitrasterwertes und des jeweiligen Feinzeitrasterwertes ergibt.

2. Verfahren nach Anspruch 1,
dadurch gekennzeichnet,
daß durch Änderung der Grobzeitrasterwerte (TCi) die Zeichen mit einer entsprechenden Links- oder Rechtsverschiebung von ihrer ursprünglichen Druckposition ausgedruckt werden.

3. Verfahren nach einem der Ansprüche 1 bis 2,
dadurch gekennzeichnet,
daß durch Änderung der Feinzeitrasterwerte vor der Sortierung der Abdruckelemente nach den Feinzeitrasterwerten (Fig. 9) Flugzeitschwankungen der Abdruckelemente kompensiert werden.

4. Verfahren nach einem der Ansprüche 1 bis 3,
dadurch gekennzeichnet,
daß bei Verwendung von einem als Typenband ausgebildeten Typenträger mit einer Vielzahl von Punkten und mit Prägezeichen die Druckausgabe als Punktrasterdruck und Prägezeichendruck erfolgt.

5. Verfahren nach einem der Ansprüche 1 bis 3,
dadurch gekennzeichnet,
daß bei Verwendung von einem als Typenband ausgebildeten Typenträger mit einer Vielzahl von Punkten die Druckausgabe als Punktrasterdruck erfolgt.

6. Verfahren nach Anspruch 4 oder 5,
gekennzeichnet durch einen überlappenden und/oder nicht überlappenden Punktdruck.

7. Anordnung zur Durchführung des Verfahrens nach Anspruch 6 für einen lückenlosen Punktdruck,
dadurch gekennzeichnet,
daß das Typenband (20) zwei Spuren (20-10, 20-20) von Punktdruckzeichen aufweist, von denen die erste Spur in einem ersten Druckzyklus den Abdruck einer durch den gegenseitigen Abstand der Abdruckelemente (131, 132, 133) bedingten lückenhaften Punktzeile (150) dient

und von denen die zweite Spur nach Vorschub des Aufzeichnungsträgers um einen dem Spurabstand (P) entsprechenden Betrag dem Auffüllen der Punktlücken dient, wobei die Anschlagsflächen der Abdruckelemente (131, 132, 133) zwei Anschlagsbereiche (131-2; 131-11) für die erste und zweite Spur aufweisen, welche gegeneinander versetzt sind.

8. Anordnung zur Durchführung des Verfahrens nach Anspruch 7 für einen lückenlosen Punktdruck,
dadurch gekennzeichnet,
daß für einen spaltenfreien Punktrasterdruck die Abdruckelemente als Druckhämmer (131, 132, 133) derart ausgebildet sind, daß benachbarte Anschlagflächen einen im wesentlichen schräg zur Zeilenrichtung verlaufenden schrägen, treppenförmig oder ähnlich ausgebildeten Abstandsspalt (140-2, 140-1) aufweisen,

und daß eine gedachte quer zur Zeilenrichtung und senkrecht zur Anschlagfläche eines Druckhammers verlaufende Ebene zumindest in einem Teilbereich die Anschlagsfläche eines der beiden benachbarten Druckhämmer schneidet, daß auf dem Typenband (20) eine erste und zweite Spur (20-10, 20-20) von Punkt-Druckzeichen angeordnet ist,

und daß das Ausdrucken einer Punktzeile (160) auf dem Aufzeichnungsträger (140) in einem ersten und einem zweiten Druckzyklus erfolgt,

wobei während des ersten Druckzyklus mit Hilfe der ersten Punkt-Druckzeichen-Spur (20-10) und dem unteren Bereich (131-2) der Druckhammer-Anschlagsflächen eine Punktzeile (150) gedruckt wird, welche Lücken im Bereich der Abstandsspalte zwischen benachbarten Druckhämmern aufweist, und wobei nach einem Vorschub des Aufzeichnungsträgers quer zur Zeilenrichtung um einen Betrag (P), der dem Abstand der Punkt-Druckzeichen-Spuren entspricht, diese Lücken mittels der zweiten Punkt-Druckzeichen-Spur und des oberen Bereichs der Druckhammer-Anschlagsflächen (131-1) mit Druckpunkten auffüllbar sind.

9. Typenband zur Durchführung des Verfahrens nach einem der Ansprüche 1 bis 3,
dadurch gekennzeichnet,
daß breite, nebeneinander auf dem Typenband angeordnete Zeichen einen größeren Abstand von Zeichenmitte zu Zeichenmitte aufweisen als schmalere Zeichen.

## Claims

1. Method for controlling line printers comprising a revolving type carrier which is moved past a row of print elements arranged in a bank and associated with the print positions,
for precalculating the actuation times Tf of the print elements for printing particular characters at particular print positions of a record carrier,
using a type carrier with equidistantly spaced scannable time marks and a reference mark,
characterized in
that the spacing of the characters on the type carrier (400) relative to the reference mark (501) equals a coarse raster value ($\Delta$T) or an integral multiple thereof,
that the coarse raster pitch is derived from the time mark pitch, with the time marks (402) simultaneously occupying coarse raster positions,
that the pitch of the print elements in the bank differs and the spacing of a print position from a reference print position (H1) equals a coarse raster value ($\Delta$T) or a multiple thereof and an additional fine raster value ($\Delta$T) or a multiple thereof,
the coarse and fine raster values being defined as coarse and fine time raster values relative to the number of revolutions of the type carrier (400),
that the print elements are sorted according to the fine raster time values of their spacing from the reference print position (Fig. 9) and
their actuation times (Tf) are calculated in the order of the print elements resulting from that sort step,
and that the actuation time of a print element at the nth print position Hn, n =1, 2, 3, 4, ..., for printing the pth character Cp, p = 1, 2, 3, 4, ..., on the type carrier, with the characters being consecutively numbered relative to the reference mark (501) and the print positions being consecutively numbered relative to the reference print position H1,
is calculated according to the relation
Tf = TCp - THn for a positive difference value TCP - THn
Tf = TC Band + (TCp - THn) for a negative difference value TCp - THn
which is subtracted from TC Band,
where TC Band is the time required for one revolution of the band and TCp is the time that passes as the pth character moves from its momentary position to the reference print position (H1), and
where THn is the time that passes as the type band moves from the nth print position Hn to the reference print position (H1),
and where T home is the time that passes as the reference mark (501) moves from its momentary position to the reference print position (H1),
and that a first table FTABC (600) and a second table FTABF (700) are generated,
the first table (600) comprising a field for each possible coarse raster time value in an ascending order,
and the second table (700) comprising a row field (700 $\Delta$T5) associated with each coarse raster time

value of the first table (600) and consisting of several subfields (700 $\Delta$T5-1, 700 $\Delta$T5-2),
and that after calculation of the actuation time of a print element, an entry for the coarse time raster value of the calculated actuation time is made in the associated field of the table (600) for the print operation to be performed later on,
and for the fine time raster value of the calculated actuation time an entry for the print position number and the fine time raster value for the print operation to be performed later on is made in the next free subfield of the row field associated with the coarse time raster,
and that for printing a line, the fields of the first table (600) are addressed in the ascending order of the coarse time raster values,
and that in the event of a coarse time raster table field entry for a print operation to be performed a branch is taken to the row field of the second table (700) associated with that coarse time value, printing the print positions defined therein in the order of the fine time raster values at a time obtained by adding the coarse time raster value and the respective fine time raster value.

2. Method according to claim 1, characterized in that changing the coarse time raster values (TCi) causes the characters to be printed left- or right-shifted from their original print position.

3. Method according to any one of the claims 1 to 2, characterized in that changing the fine time raster values prior to sorting the print elements according to the fine time raster values (Fig. 9) causes flight time variations of the print elements to be compensated for.

4. Method according to any one of the claims 1 to 3, characterized in that by using a type carrier with a plurality of dots and engraved characters as a type band, a dot raster/engraved character print output is obtained.

5. Method according to any one of the claims 1 to 3, characterized in that by using a type carrier with a plurality of dots as a type band, a dot raster print output is obtained.

6. Method according to claim 4 or 5, characterized by overlapping and or non-overlapping dot printing.

7. Arrangement for implementing the method according to claim 6 for gapless dot printing, characterized in that the type band (20) comprises two tracks (20-10, 20-20) of dot characters, the first track of which in a first print cycle serves to print a dot row with gaps caused by the mutual spacing of the print elements (131, 132, 133), and the second track of which after advance of the record carrier by a value corresponding to the track spacing (P) serves to fill the dot gaps, the impact faces of the print elements (131, 132, 133) comprising two impact regions (131-2; 131-11) for the first and the second track, which are staggered relative to each other.

8. Arrangement for implementing the method according to claim 7 for gapless dot printing, characterized in that for gap-free dot raster printing the print elements are designed as print hammers (131, 132, 133) such that adjacent impact faces have an oblique stepped or similarly shaped spacer gap (140-2, 140-1) extending substantially obliquely to the line direction,
and that an assumed plane extending transversely to the line direction and perpendicularly to the impact face of a print hammer intersects the impact face of one of the two adjacent print hammers in a partial region of the spacer gaps,
that a first and a second track (20-10, 20-20) of dot characters is provided on the type band (20),
and that a dot line (160) is printed on the record carrier (140) in a first and a second print cycle,
printing in the first print cycle, by means of the first dot character track (20-10) and the lower portion (131-2) of the print hammer impact faces, a dot line (150) having gaps in the region of the spacer gaps between adjacent print hammers,
and, after the record carrier has been advanced transversely to the line direction by an amount (P) corresponding to the space of the dot character tracks, filling said gaps with dots by means of the second dot character track and the upper portion of the print hammer impact faces (131-1).

9. Type band for implementing the method according to any one of the claims 1 to 3, characterized in that broad adjacent characters on the type band have a greater spacing from one character centerline to another than narrower characters.

**Revendications**

1. Procédé pour commander des imprimantes ligne par ligne comportant un porte-caractères circulant, qui se déplace devant une série d'éléments d'impression associés aux positions d'impression et disposés sous la forme d'un ensemble
pour le calcul préalable des instants d'actionnement Tf des éléments d'impression en vue de réaliser l'impression de caractères déterminés dans des positions déterminées d'impression d'un support d'enregistrement,
moyennant l'utilisation d'un porte-caractères avec des marques temporelles explorables équidistantes et un marquage de référence,
caractérisé par le fait
que la distance des caractères sur le porte-caractères (400) par rapport au marquage de référence (501) correspond à une valeur de trame grossière (ΔT) ou à des multiples entiers de cette valeur,
que le pas de la trame grossière est dérivé du pas de répartition des marques temporelles (402), qui occupent simultanément des positions de la trame grossière,
que le pas de répartition des éléments d'impression dans l'ensemble d'éléments d'impression est différent et que la distance entre une position d'impression et une position d'impression de référence (H1) correspond à une valeur (..T) de la trame grossière ou à des multiples de cette valeur et à une valeur supplémentaire (Δt) d'une trame fine ou à des multiples de cette valeur,
les valeurs de la trame grossière et de la trame fine étant définies sous la forme de valeurs de la trame temporelle grossière et de la trame temporelle fine - rapportées à la vitesse de circulation du porte-caractères (400),

que les éléments d'impression sont sélectionnés en fonction des valeurs, contenues dans la trame temporelle fine, de leur distance par rapport à la position d'impression de référence (figure 9), et
que leurs instants d'actionnement (Tf) dans la succession, obtenue à partir de cette sélection, des éléments d'impression sont calculés, et
que l'instant d'actionnement d'un élément d'impression situé au niveau de la n-ème position d'impression Hn, n=1, 2, 3, 4, ..., pour l'impression du p-ème caractère Cp, p=1, 2, 3, 4, ..., sur le porte-caractères est calculé, dans le cas d'une numérotation continue des caractères, d'une manière rapportée au marquage de référence (501) et, dans le cas d'une numérotation continue des positions d'impression, d'une manière rapportée à la position d'impression de référence H1, à partir de la relation
$Tf = TCp-THn$ pour une valeur de différence TCP-THn positive
$Tf = TC$ bande $+ (TCp-THn)$ pour une valeur de différence TCp-THn négative,
qui est soustraite de TC bande,
TC bande désignant la durée d'une circulation de la bande, et
TCp désignant la durée s'écoulant lorsque le p-ème caractère se déplace de sa position instantanée jusqu'à la position de l'impression de référence (H1), et
THn désignant la durée s'écoulant lorsque la bande portecaractères se déplace depuis la n-ème position d'impression Hn jusqu'à la position d'impression de référence (H1), et
T Home désignant la durée qui s'écoule lorsque le marquage de référence (501) se déplace de sa position instantanée jusqu'à la position d'impression de référence (H1), et qu'une première table FTABC (600) et une seconde table FTABF (700) sont formées,
la première table (600) comportant une zone pour chaque valeur d'instant possible de la trame grossière, dans l'ordre croissant, et
la seconde table (700) comportant, en association avec chaque valeur d'instant de la trame grossière de la première table (600), une zone de lignes (700 ΔT5) constituée par plusieurs zones secondaires (700 ΔT5-1, 700 ΔT5-2), et
qu'après le calcul de l'instant d'actionnement pour un élément d'impression pour la valeur, contenue dans la trame temporelle grossière, de l'instant d'actionnement calculé d'actionnement dans la zone de la table (600), associée à cet instant, intervient un enregistrement pour l'impression devant être exécutée ultérieurement, et
pour la valeur, contenue dans la trame temporelle fine, de l'instant d'actionnement calculé dans la zone secondaire libre immédiatement suivante de la zone des lignes associée à la valeur de temps de la trame grossière, une entrée est réalisée pour le numéro de la position d'impression et pour la valeur de la trame temporelle fine pour l'impression devant être exécutée ultérieurement, et
que pour l'impression d'une ligne d'impression, les zones de la première table (600) sont adressées dans l'ordre croissant des valeurs de la trame temporelle grossière, et que dans le cas d'un enregistrement des zones de la table de la trame temporelle grossière, pour une impression devant être exécutée, une ramification est réalisée en direction de la zone de lignes de la seconde table (700), qui est associée à cette valeur de la trame temporelle grossière, et pour les positions d'impression, indiquées dans cette table, l'impression est réalisée, selon l'ordre croissant des valeurs de la trame temporelle fine, à un instant obtenu par addition de la valeur de la trame temporelle grossière et de la valeur respective de la trame temporelle fine.

2. Procédé selon la revendication 1, caractérisé en ce que grâce à une modification des valeurs (TCi) de la trame temporelle grossière, les caractères sont imprimés avec un décalage correspondant, vers la gauche ou vers la droite, par rapport à leur position d'impression initiale.

3. Procédé selon l'une des revendications 1 à 2, caractérisé en ce que des variations du temps de vol des éléments d'impression sont compensées au moyen d'une modification des valeurs de la trame temporelle fine avant la sélection des éléments d'impression, en fonction des valeurs de la trame temporelle fine (figure 9).

4. Procédé selon l'une des revendications 1 à 3, caractérisé en ce que, dans le cas de l'utilisation d'un porte-caractères agencé sous la forme d'une bande porte-caractères et comportant une multiplicité de points et de caractères en relief, l'impression est réalisée sous la forme d'une impression d'un réseau de points et d'une impression de caractères en relief.

5. Procédé selon l'une des revendications 1 à 3 caractérisé en ce que, dans le cas de l'utilisation d'un porte-caractères réalisé sous la forme d'une bande porte-caractères et comportant une multiplicité de points, l'impression est réalisée sous la forme d'une impression d'un réseau de points.

6. Procédé selon la revendication 4 ou 5, caractérisé par une impression de points avec et/ou sans chevauchement.

7. Dispositif pour la mise en œuvre du procédé selon la revendication 6 pour une impression de points sans espace vide, caractérisé en ce que le porte-caractères (20) comporte deux pistes (20-10, 20-20) de caractères d'impression de points, dont la première sert, au cours d'un premier cycle d'impression, à imprimer une ligne de points (150) sans intervalle vide, conditionnée par la distance réciproque des éléments d'impression (131, 132, 133), et dont la seconde sert, après avance du support d'enregistrement sur une distance correspondant à la distance entre pistes (P), à remplir les intervalles vides entre les points, les surfaces d'impact des éléments d'impression (131, 132, 133) comportant deux zones d'impact (131-2;131-11) pour les première et seconde pistes, qui sont décalées l'une par rapport à l'autre.

8. Dispositif pour la mise en œuvre du procédé selon la revendication 7 pour une impression de points sans intervalles vides, caractérisé en ce que pour une impression du réseau de points sans colonnes, les éléments d'impression sont réalisés sous la forme de marteaux d'impression (131, 132, 133) de telle sorte que les surfaces d'impact voisines sont séparées par une fente de séparation (140-2, 140-1), qui est sensiblement oblique par rapport à la direction des lignes, et possède une forme en escalier ou analogue, et qu'un plan imaginaire s'étendant transversalement par rapport à la direction des lignes et perpendiculairement à la surface d'impact d'un marteau d'impression, recoupe, au moins dans une zone partielle des fentes de séparation, la surface d'impact de l'un des deux marteaux d'impression voisins, que des première et seconde pistes (20-10, 20-20) de lignes d'impression de points sont disposées sur la bande porte-caractères (20), et que l'impression d'une ligne de points (160) sur le support d'enregistrement (140) est réalisée lors d'un premier et d'un second cycle d'impression, auquel cas, pendant le premier cycle d'impression, une ligne de points (150), qui possède des intervalles vides dans la zone des fentes de séparation présentes entre les marteaux d'impression voisins, est imprimée à l'aide de la première piste de caractères d'impression de points (20-10) et de la partie inférieure (131-2) des surfaces d'impact des marteaux d'impression, et après une avance du support d'enregistrement transversalement par rapport à la direction d'une ligne, sur une distance (P), qui correspond à la distance entre les pistes de caractères d'impression de points, ces intervalles vides peuvent être remplis de points d'impression au moyen de la seconde piste de caractères d'impression de points et de la partie supérieure des surfaces d'impact (131-1) des marteaux d'impression.

9. Bande porte-caractères pour la mise en œuvre du procédé selon l'une des revendications 1 à 3, caractérisée en ce que la distance de séparation centre-à-centre de caractères larges disposés côte-à-côte sur la bande portecaractères est supérieure à la distance séparant des caractères plus étroits.

202

TYPENBAND MIT DRUCK-ZEICHEN

⊣M

HÄMMER

128 129 130 131 132

201

t0 : SUBSCANGRUPPE SSO : 1, 7, 13, ...

**FIG.1A**

202

TYPENBAND MIT DRUCK-ZEICHEN

⊣M

HÄMMER

128 129 130 131 132

t1 : SUBSCANGRUPPE SS1 : 4, 10, ... 130

**FIG.1B**

203

204

**FIG.2**

FIG. 3

FIG. 4

FIG. 5

FIG. 6

FIG. 7

EP 0 215 141 B1

| H-No | ZEITLICHER ABSTAND ZU H-No 1 | |
|---|---|---|
| | $\Delta T$ | $\Delta t$ |
| 1 | 0 | 0 |
| 2 | 0 | 9 |
| 3 | 8 | 1 |
| 4 | 12 | 3 |
| 5 | 16 | 5 |
| 6 | 20 | 5 |
| ¦ | ¦ | ¦ |
| ¦ | ¦ | ¦ |
| 129 | 512 | 2 |
| 130 | 516 | 0 |
| 131 | 520 | 1 |
| 132 | 524 | 4 |

## FIG. 8

| H-No | ZEITLICHER ABSTAND ZU H-No 1 | |
|---|---|---|
| | $\Delta T$ | $\Delta t$ |
| 1 | 0 | 0 |
| 130 | 516 | 0 |
| 3 | 8 | 1 |
| 131 | 520 | 1 |
| 129 | 512 | 2 |
| 4 | 12 | 3 |
| 132 | 524 | 4 |
| 5 | 16 | 5 |
| 2 | 0 | 9 |
| ¦ | ¦ | ¦ |
| ¦ | ¦ | ¦ |

## FIG. 9

**W M**

## FIG. 10A

505   506

400 — **W M**

$\Delta T$

## FIG. 10B

FTABC   600

| P | $\Delta T$ MAX |
|---|---|
| | $\Delta T$ 11 |
| | $\Delta T$ 10 |
| | $\Delta T$ 9 |
| | $\Delta T$ 8 |
| | $\Delta T$ 7 |
| | $\Delta T$ 6 |
| | $\Delta T$ 5 |
| | $\Delta T$ 4 |
| | $\Delta T$ 3 |
| | $\Delta T$ 2 |
| | $\Delta T$ 1 |

ANORDNUNG IN
AUFSTEIGEN-
DER REIHEN-
FOLGE FÜR $\Delta T$

600-1

700 $\Delta$T5-1    700 $\Delta$T5-2

| H-No 6 | $\Delta t$ = 5 | H-No 9 | $\Delta t$ = 7 |
|---|---|---|---|

700 $\Delta$T5

700

→ FTABF

ANORDNUNG IN AUFSTEIGENDER
REIHENFOLGE FÜR $\Delta t$

## FIG. 11

FIG.12

FIG.13

FIG.14A

FIG.14B